# EUROPEAN PATENT APPLICATION

(11) **EP 3 805 920 A1**
(43) Date of publication of application: **14.04.2021**
(21) Application number: 20154057.2
(22) Date of filing: 28.01.2020
(51) Int. Cl.: G06F 8/658, G06F 8/30, G06F 8/71

(54) **METHOD FOR SIMPLIFYING AMENDMENT HANDLING OF PARTLY OR FULLY AUTOMATICALLY GENERATED FILES IN A DESIGN PROCESS**

(30) Priority: 11.10.2019 EP 19202790
(71) Applicant: Shenzhen Goodix Technology Co., Ltd., Shenzhen, Guangdong 518045 (CN)
(72) Inventor: Jakschik, Daniel, 01157 Dresden (DE)
(74) Representative: Lippert Stachow Patentanwälte Rechtsanwälte Partnerschaft mbB

(57) **Abstract**

The invention discloses a method for simplifying amendment handling of partly or fully automatically generated files in a design process. The object of the invention to provide a method for obtaining changes in partly or fully automatically generated files without having to make complicated and extensive changes to the machine-readable specification, the code generator or the code generator parameters will be solved by a method comprising the following steps:
- performing a pre-handling procedure to create a patch file P' which contains a difference between a previously automatically generated file G and a modified file M of said previously automatically generated file G,
- generating an updated automatically generated file G' of the previously automatically generated file G by re-invoking a code generator,
- performing a post-handling procedure by applying the patch file P' on the updated automatically generated file G', resulting in a result file G" which contains and combines all changes, whereas amendments between the previously automatically generated file G and the updated automatically generated file G' are post-editable.

## Description

The invention discloses a method for simplifying amendment handling of partly or fully automatically generated files in a design process.

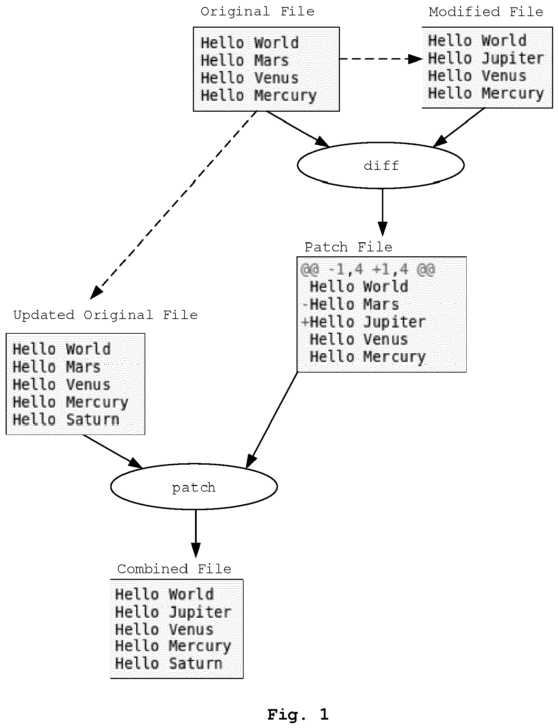

The starting point of the invention is the handling of files which have been amended, in particular how said amendments can be tracked backward if these files were partly or fully automatically generated. A first starting point is the comparison of two files with each other in order to determine differences between these two files. The GNU tools *diff* (D. H. Paul Eggert, Mike Haertel, "diff(1) - linux man page," 2002. [Online].Available: https://linux.die.net/man/1/diff) and its counterpart *patch* (L. Wall,"patch(1) - linux man page," 1988.[Online].Available: https://linux.die.net/man/1/patch) are tools for handling file changes. Figure 1 depicts the workflow of these programs. An original file and a modified version of it are assumed. *diff* computes the differences between these two and serves a file with information, which lines got removed and which lines had been added - called a patch file. The patch file might contain the lines next to the change, to ease the work of patch later on.

It is assumed that the original file got updated at a different section (i.e. extended), but without the changes of the modified version. The *patch* tool can now re-apply the changes stored in the patch file. The resulting file, called result file, contains and combines all changes.

A designer of program code has one main task - transforming a specification into a design, hence to create code.

Code creation can be either manual, automated, or a mixture of manual and automated approaches.

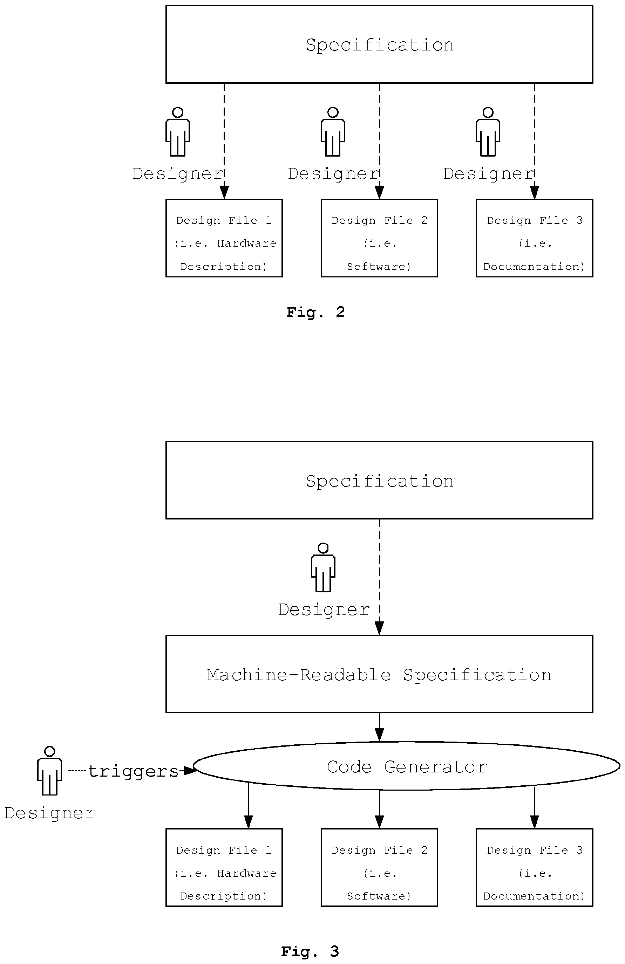

With a manual approach, the transformation is done by hand, see figure 2 for illustration. The specification may have any format - written, spoken or just in mind. In this context, the resulting output of this process is a text file with any content. The aspects of the specification may need to be reflected in multiple design files of different disciplines. For instance a 'Design File 1' with a hardware description, i.e. Verilog, of a FPGA (field programmable gate array) or ASIC (application-specific integrated circuit). Another file 'Design File 2' may contain software, i.e. C++, a third 'Design File 3' may document the design.

One major issue of the manual approach is consistency. Within the design process the specification changes or is refined, globally or in details. The disadvantage is that not all design files may be updated properly.

In the automated approach tools and scripting can be used for the design process, meaning that a file is automatically generated. A code generator produces the 'Design Files' instead of a designer by hand. But the designer has to transform the specification into a machine-readable format, see figure 3 and he has to run the code generator.

On a specification change, the designer updates the machine-readable specification. The code generator produces all design files based on the same information. None of the files is left outdated. The automated approach is much faster (mostly) and less error-prone.

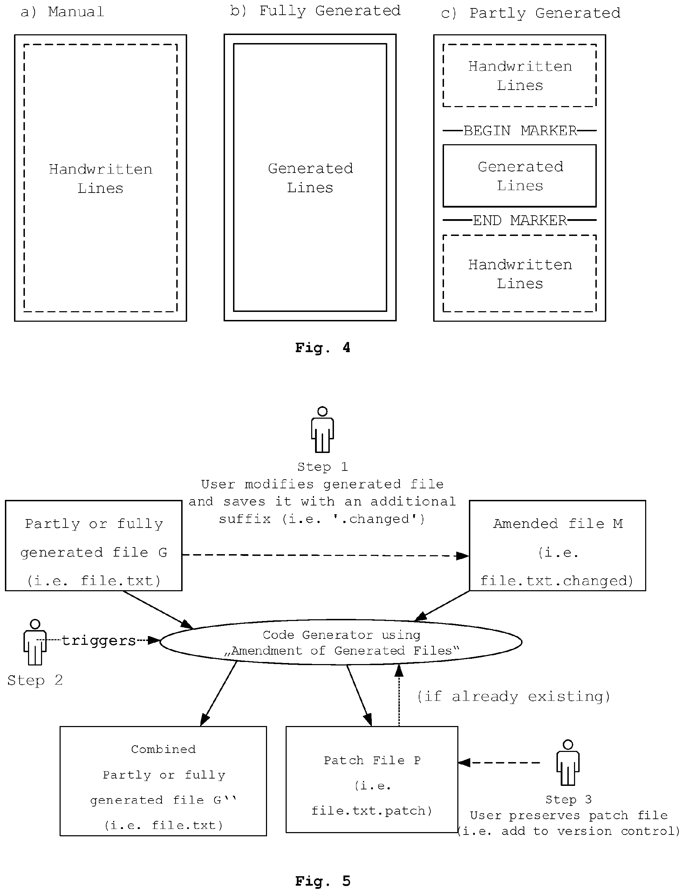

The design of one discipline, i.e. software development, is more complex than just creating one file. Not all files can be generated, as the development of a code generator is too complicated or even not possible. At the end, there are three different variants of files in a design process, see figure 4 - manual text files with handwritten content only (figure 4a), based on the manual approach; Fully generated text files with generated lines only (figure 4b), based on the automated approach; and partly generated text files with a mixture of handwritten and generated lines (figure 4c), separated by machine-readable markers.

Partly generated text files use various approaches to distinguish between handwritten and generated lines. But at the end, every line within such a file can be assigned to one of the approaches manual or automated.

A manual maintained or created line can be changed at any time, by just changing it. But changes on generated lines are not preserved. That means that a text file or line generated by the automated approach can only be changed by invoking the code generator and changing the machine-readable specification, the code-generator or the code generator parameters. The problem is that if there are any edits of generated lines, for whatever reason, i.e. specification freeze, human-readable specification bug, code generator bug, the changes will be overwritten and lost at the next invocation of the code generator.

The object of the present invention is to provide a method for obtaining changes in partly or fully automatically generated files without having to make complicated and extensive changes to the machine-readable specification, the code-generator or the code generator parameters.

The object of the invention will be solved by a method for simplifying amendment handling of partly or fully automatically generated files in a design process, the method comprising the following steps:
- performing a pre-handling procedure to create a patch file P' which contains a difference between a previously automatically generated file G and a modified file M of said previously automatically generated file G,
- generating an updated automatically generated file G' of the previously automatically generated file G by re-invoking a code generator,
- performing a post-handling procedure by applying the patch file P' on the updated automatically generated file G', resulting in a result file G" which contains and combines all changes, whereas amendments between the previously automatically generated file G and the updated automatically generated file G' are post-editable.

Automatically generated files are files that are an output of a code generator. They can have any format, i.e. binary or text.

A code generator is an algorithm that generates files. The algorithm must be deterministic; hence an identical input must result in an identical output.

A design process in the sense of the invention is any workflow which translates a specification into text or binary files. The specification may have any format - written, spoken or just in mind.

The integration of the inventive method as a standardized flow for every partly or fully automatically generated file G into a process of code generation has the advantage that it is possible to post-edit any partly or fully automatically generated files G which had been changed and were processed and produced by a code generator. Furthermore, such handled partly or fully automatically generated files or lines can be fixed afterwards, even if the human-readable specification is frozen or locked. So, the inventive method allows that changes in automatically generated files or lines are still preserved, by detecting changes of automatically generated files or lines by computing a difference, storing said difference, automatically generating the file according to the necessary changes as usual and patching the automatically generated file by applying the stored difference. Hence all changes are post-editable, even though the original data has been overwritten by for example a code generator.

So, an automatically generated file G in the sense of the invention is understood as a file which has been generated by a code generator. An updated automatically generated file G' in the sense of the invention is understood as a file which contains changes in comparison to a previously automatically generated file G whereas these changes has been written and incorporated by a code generator; so the updated automatically generated file G' is the output of a code generator after changes to specification S or the code generator. A result file G" in the sense of the invention combines and contains all changes incorporated by the code generator and by manually updating any previously automatically generated file G whereas the manually modified changes to the previously automatically generated file G is stored as file M hence a modified version of the generated file G. The result file G" is the output of the amendment handling.

In other words, the handling of the file amendment requires two steps, one before and one after the generation of an updated automatically generated file G'. The handling before the generation of file G', hence an updated version of file G is named pre-handling procedure and the handling after the generation of file G' as an updated version of file G is named post-handling procedure. The pre-handling creates, updates or deletes the patch file P' and deletes a modified file M. The modified file M is a file which contains changes on an automatically generated file G that has been performed before updating said automatically generated file G again with a code generator. The pre-handling uses the previously automatically generated file G, the modified file M and a previous patch file P, whereas the previous patch file P contains the difference between an original automatically generated file G and the modified file M of said original automatically generated file G of a previous tracking operation of the inventive method. The post-handling checks the existence of a patch file P' and applies it.

According to a variant of the inventive method, during the pre-handling procedure the previously automatically generated file G is copied to a temporary file X, which is traced back to a pre-versioned automatically generated file by patching it with the previous patch file P, so that corresponding changes are undone. So, at this point of the pre-handling procedure, file X contains originally written content of file G', hence the content of the previous amendment handling after it was generated by the code generator. The pre-versioned automatically generated file is understood as the original automatically generated file of a previously tracking operation of the inventive method.

Pursuant to a preferred variant of the inventive method, the temporary file X and modified file M are compared by a diff tool, resulting in the patch file P', whereas the temporary file X and modified file M are removed afterwards. The diff tool compares file X and file M. The output is the patch file P'. It is recommended to use the unified diff approach, as it gives more context and is therefore more stable.

According to a further variant of the inventive method, if the patch file P' is empty, said empty patch file is removed. For speed optimization, an empty patch file should be removed. After this step the pre-handling procedure is done.

According to a variant of the inventive method, in the post-handling procedure if no patch file P' exists, the output is directly the result file G" which is post-editable. If a patch file P' is empty or does not exist, there will be no difference between an updated automatically generated file G and a previously automatically generated file of said automatically generated file G. If a patch file P' exist, it will be applied on the previously automatically generated file G' resulting in the result file G", which is post-editable.

According to a variant of the inventive method, the modified file M is distinguished by a suffix .changed.

According to another variant of the inventive method, the patch files P and P' are distinguished by a suffix .patch.

According to another further variant of the inventive method, the modified file M and the patch files P and P' are stored according to a fixed scheme, i.e. next to the result file G".

These suffixes are recommended but not a must. Any other filename or location scheme is valid. The advantage of a scheme is that the files can be automatically found and stored without any explicit notification of the code generator.

The invention will be explained in more detail using exemplary embodiments.

The appended drawings show
- Fig. 1: GNU Diff and Patch Workflow;
- Fig. 2: Manual design flow;
- Fig. 3: Automated design flow;
- Fig. 4: Flavors of file creation;
- Fig. 5: Amendment handling of generated files in view of an end-user according to the inventive method;
- Fig. 6: Code Generation without amendment handling according to the inventive method;
- Fig. 7: Code Generation with amendment handling according to the inventive method;
- Fig. 8: Data Flow according to the inventive method;
- Fig. 9: Schematic view of the pre-handling procedures according to the inventive method;
- Fig. 10: Schematic view of the post-handling procedures according to the inventive method.

For the description of the method according to the invention, there are two views: On the one hand the user workflow, which describes the steps an end-user has to perform to amend an automatically generated file. On the other hand, there is the amendment-handling tool workflow to handle changes to automatically generated files.

From the user's perspective, the user has to follow the three step workflow depicted in figure 5. In a first step the user modifies a generated file (partly or fully generated file G, i.e. file.txt), and saves it with an additional suffix, i.e. '.changed'. The first step results in an amended file M, i.e. file.txt.changed. In a second step the user triggers the code generator which uses the partly or fully generated file G and the amended file M as inputs and outputs on the one hand a combined (new) partly or fully generated file G", i.e. file.txt and on the other hand a patch file P, i.e. file.txt.patch. If a previous patch file P already exists, i.e. from a previous running of the inventive method, said previous patch file is used by the code generator, whereas this procedure is described later. The patch files P and P' are needed to reconstruct all previous amendments of the automatically generated files G by the code generator. The amended file M gets removed by the amendment handling as soon as the patch file P' has been created.

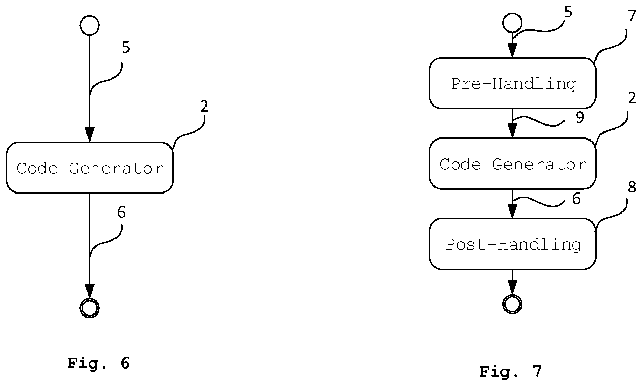

From the amendment-handling tool workflow perspective, the handling of the file amendment requires two steps, one before and one after the generation of file G' 6. Figures 6 and 7 show the difference of the file generation without (figure 6) and with amendment handling according to the inventive method (figure 7). Hitherto, the specification S of a design process was transformed into design files by a code generator 2. Changes to the design files could not be preserved, because all changes were overwritten and lost at the next invocation of the code generator 2. This problem is solved by the inventive method.

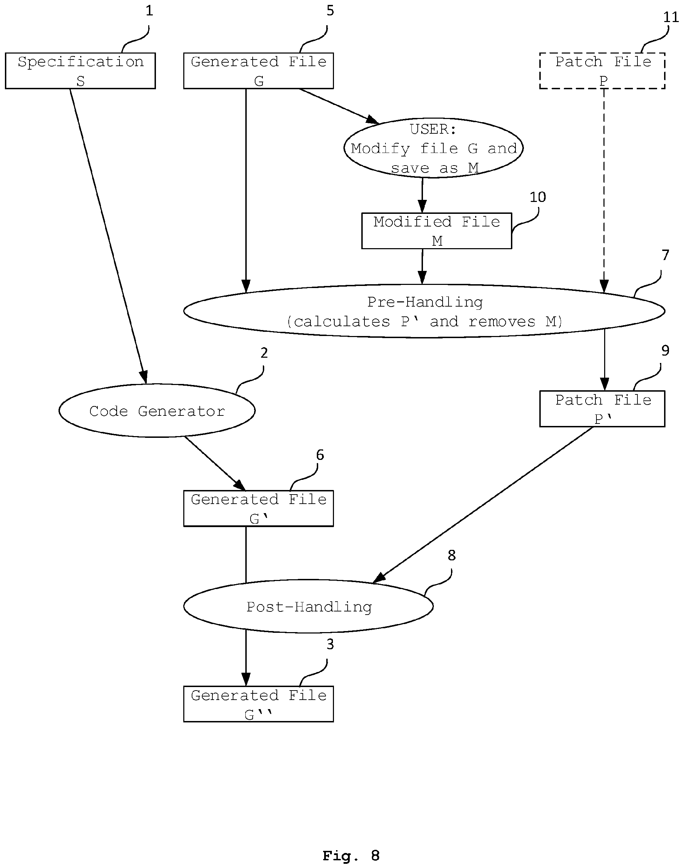

Figure 8 shows the data Flow according to the inventive method. The pre-handling 7 uses the previously automatically generated file G 5, the modified file M 10 and a previous patch file P 11, whereas the previous patch file P 11 contains the difference between an original automatically generated file and an old modified file M of said original automatically generated file of a previous tracking operation of the inventive method. In the pre-handling procedure 7 the patch file P' 9 is calculated and file M 10 is removed. The pre-handling 7 outputs the patch file P' 9 which contains the differences between the previously automatically generated file G 5 and the modified file M 10 of said previously automatically generated file G 5. The code generator 2 is re-invoked and generating an updated automatically generated file G' 6 of the previously automatically generated file G 5. In the post-handling procedure 8 the patch file P' 9 and the updated automatically generated file G' 6 are used as inputs resulting in the result file G" 3 which contains and combines all changes, whereas amendments between the previously automatically generated file G 5 and the updated automatically generated file G' 6 are post-editable.

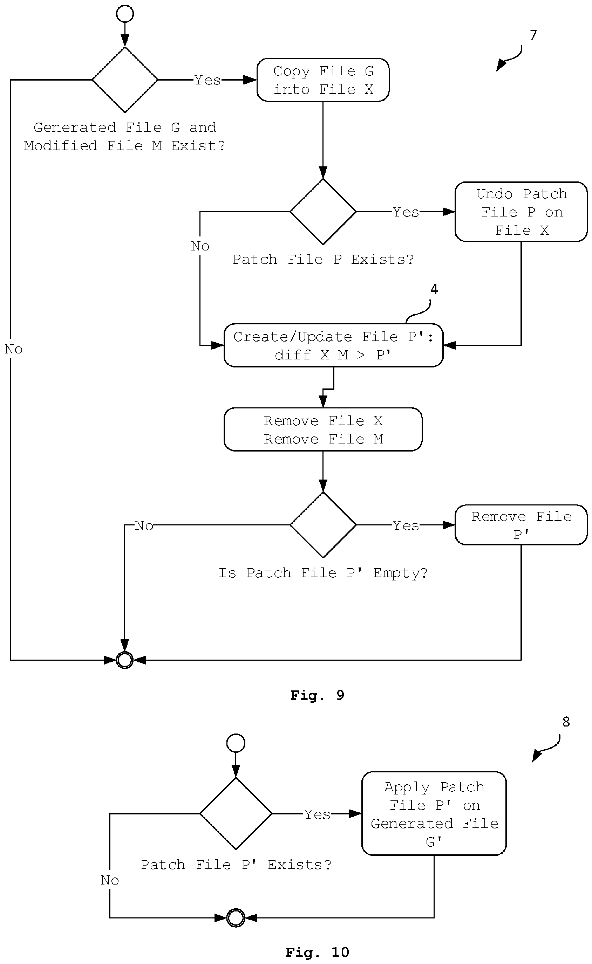

Figure 9 illustrates the pre-handling procedure 7 in detail. If a partly or fully automatically generated file G 5 and a modified file M 10 of the automatically generated file G 5 exist, a temporary copy of file G 5 is taken, named file X 12. In case of an existing previous patch file P 11, the corresponding changes have to be undone. At this point, file X 12 contains the originally written content of file G 5. The difftool 4 'diff' compares files X 12 and M 10. The output is the new patch file P' 9. It is recommended to use the unified diff approach, as it gives more context and is therefore more stable. The first to two lines of the previous patch file P 11 contain file names. These lines must be removed. The modified file M 10 and the temporary file X 12 are obsolete and must be removed. For speed optimization, an empty patch file should be removed. After that the pre-handling 7 is done. The pre-handling 7 is used to save the content of automatically generated files in patch files so that they can be accessed later in the design process. The result of the pre-handling procedure 7 is a patch file P' 9.

Figure 10 illustrates the post-handling procedure 8 which creates the result file G" 3 by checking the existence of a patch file P' 9 and applying it to the output file G' 6, hence the updated automatically generated file G' 6 of the code generator 2. The result file G" 3 is post-editable due to the preserved content in the patch file.

### List of Reference Signs

- 1: Specification
- 2: Code generator
- 3: Result file G" according to the inventive method
- 4: Diff tool invocation
- 5: Previously automatically generated file G
- 6: Updated automatically generated file G'
- 7: Pre-handling process
- 8: Post-handling process
- 9: Patch file P'
- 10: modified file M
- 11: previous patch file P
- 12: file X

## Claims

1. A method for simplifying amendment handling of partly or fully automatically generated files G in a design process, the method for amendment handling comprising the following steps:
- performing a pre-handling procedure (7) to create a patch file P' (9) which contains a difference between a previously automatically generated file G (5) and a modified file M (10) of said previously automatically generated file G (5),
- generating an updated automatically generated file G' (6) of the previously automatically generated file G (5) by re-invoking a code generator (2),
- performing a post-handling procedure (8) by applying the patch file P' (9) on the updated automatically generated file G' (6), resulting in a result file G" (3) which contains and combines all changes, whereas amendments between the previously automatically generated file G (5) and the updated automatically generated file G' (6) are post-editable.

2. The method according to claim 1, wherein in the pre-handling procedure (7) the previously automatically generated file G (5) is copied to a temporary file X (12), which is traced back to a pre-versioned automatically generated file by patching it with a previous patch file P (11), so that corresponding changes are undone.

3. The method according to claim 2, wherein the temporary file X (12) and modified file M (10) are compared by a diff tool (4), resulting in the patch file P' (9), whereas the temporary file X (12) and modified file M (10) are removed afterwards.

4. The method according to claim 3, wherein if the patch file P' (9) is empty, said empty patch file P' (9) is removed.

5. The method according to claim 1, wherein in the post-handling procedure (8) if no patch file P' (9) exists, the output is directly the result file G" (3) which is post-editable.

6. The method according to one of the former claims, wherein the modified file M (10) is distinguished by a suffix .changed.

7. The method according to one of the former claims, wherein the patch files P (11) and P' (9) is distinguished by a suffix .patch.

8. The method according to one of the former claims, wherein the modified file M (10) and the patch files P (11) and P' (9) are stored according to a fixed scheme, i.e. next to the result file G" (3).
